# EUROPEAN PATENT APPLICATION

(11) **EP 1 816 825 A1**
(43) Date of publication of application: **08.08.2007**
(21) Application number: 06742203.0
(22) Date of filing: 21.06.2006
(51) Int. Cl.: H04L 29/06

(54) **A METHOD AND SYSTEM FOR AUTHENTICATING USER TERMINAL**

(30) Priority: 21.06.2005 CN 200510077476
(71) Applicant: Huawei Technologies Co., Ltd., Longgang District Shenzhen Guangdong 518129 (CN)
(72) Inventor: HUANG, Yingxin, Huawei Administration Building, 18129 Shenzhen Guangdong (CN); ZHU, Fenqin, Huawei Administration Building, 18129 Shenzhen Guangdong (CN)
(74) Representative: Thun, Clemens
(86) International application number: PCT/CN2006/001416
(87) International publication number: WO 2006/136106

(57) **Abstract**

The embodiments of the present invention disclose a method and system for authenticating User Equipment (UE) includes: initiating by an Early IMS UE an access request containing a user identity to an application service entity; acquiring by the application service entity binding information containing an IP address from a Home Subscriber Server (HSS) according to the access request; authenticating by the application service entity the Early IMS UE according to the binding information and the access request. The embodiments of the present invention make it possible to authenticate the UE accessing the application service entity, which ensures not only the access of the legal UE but also the security of the network.

## Description

### Field of the Invention

The present invention relates to the field of mobile communications, and in particular, to a method and a system for authenticating Early IP Multimedia Subsystem (IMS) User Equipment (UE) accessing the application service entity.

### Background of the Invention

With the development of broadband networks, requirements for mobile communications are beyond voice communications. Combined with such data services as a presence service, a short message service, a WEB browsing service, a location information service, a PUSH service and a file sharing service, mobile communications may provide various media type services, e.g., audio, video, picture and text, so as to meet different requirements of users.

The third Generation Partnership Project (3GPP) and 3GPP2 successively put forward IMS architecture based on the IP to implement various multimedia applications through a standard open structure in mobile networks so as to provide users with more selections and richer experiences.

The IMS architecture is overlapped on a Packet Service Domain (PS-Domain) network, and the authentication related entity includes a Call Session Control Function (CSCF) entity and a Home Subscriber Server (HSS) entity. The CSCF further includes three logic entities, i.e., a Serving-CSCF (S-CSCF), a Proxy-CSCF (P-CSCF) and an Interrogating-CSCF (I-CSCF), which may be combined into one or different physical entities. The S-CSCF is a service control center of the IMS for executing session control, maintaining session status, managing user information and generating charging information; the P-CSCF is an access point for UE accessing the IMS, which is used for performing user registration, controlling Quality of Service (QoS) and performing security management; the I-CSCF is in charge of inter-working between different IMS domains, managing assignment of the S-CSCF, shielding network topologies and configuration information towards the external, and generating charging data. The HSS is a very important user database for supporting various network entities to process calls and sessions.

In an earlier version of the 3GPP IMS, i.e., Release 5 version, the IMS is intended for use in the third generation mobile communication network (the 3G network). Due to richer services of the IMS network, a requirement of using the IMS services in a 2G network is brought to operators. The 2G network, however, do not support security related functions of 3G-based IMS, for example quintet authentication/network verification and so on. In order to solve the authentication problem when a 2G UE accesses the IMS network, the 3GPP provides an interim authentication scheme, which provides a certain security function for IMS services in the 2G network. When UE supports a 3G-based authentication scheme, the UE may be authenticated by the full 3G-based authentication scheme. In this way, both 2G user and 3G user are able to use IMS services after a successful authentication. Generally, the full 3G-based authentication scheme is called as Full 3GPP IMS authentication mode, the interim authentication scheme is called as Early IMS authentication mode, and the UE supporting the Early IMS is called as Early IMS UE.

Any 2G UE or 3G UE may either use services provided by an IMS-based Application Server (AS), e.g., a presence service, or perform some management for an IMS-based AS or an AS Proxy (AP), for example managing some group list information in the IMS-based AS or the AP, and so on.

To use the services provided by the IMS-based AS, UE first should access the 3GPP PS-Domain and is authenticated by the IMS network. The IMS network authenticates the Early IMS UE using the Early IMS authentication mode and authenticates the 3G UE using the Full 3GPP IMS authentication mode.

To manage the AS directly (based or not based on IMS) or through the AP, the UE still has to access the 3GPP PS-Domain first, then accesses the AS or AP directly through a Ut interface, which means that the IMS network does not authenticate the UE. Meanwhile, it is specified in existing specifications that the UE may access the AS or AP only after being authenticated successfully using a Generic Authentication Architecture (GAA) mode.

The conventional GAA-based authentication mode, however, supports only the 3G UE but not the Early IMS UE, such as the 2G UE. As a result, the Early IMS UE can not access the AS or it may access the AS directly without any authentication.

If Early IMS UE is not allowed to access the AS, it is inevitable not only to cause operators to lose many customers, but also to affect the satisfaction of the users.

If Early IMS UE may access the AS directly without an authentication, it is obvious that the security of the AS and the whole network may not be guaranteed.

### Summary of the Invention

Certain embodiments of the present invention provide a method, a system and an application service entity for authenticating Early IMS UE accessing the application service entity.

A method for authenticating User Equipment (UE), applicable to Early IP Multimedia Subsystem (IMS) UE accessing an application service entity directly, the Early IMS UE acquires an IP address upon accessing a third generation mobile communication system, the method includes:
initiating, by the Early IMS UE, an access request containing a user identity to the application service entity;
acquiring, by the application service entity, binding information containing an IP address from a Home Subscriber Server (HSS) according to the access request;
authenticating, by the application service entity, the Early IMS UE according to the binding information and the access request.

Said authenticating the Early IMS UE according to the binding information and the access request includes:
determining, by the application service entity, whether the IP address in the binding information matches the IP address of the Early IMS UE; if they match, the Early IMS UE is authenticated successfully; otherwise, the Early IMS UE is authenticated unsuccessfully.

Said authenticating the Early IMS UE according to the binding information and the access request includes:
determining, by the application service entity, whether the IP address and the user identity in the binding information matches the IP address and the user identity of the Early IMS UE respectively; if they match respectively, the Early IMS UE is authenticated successfully; otherwise, the Early IMS UE is authenticated unsuccessfully.

The method further includes:
saving, by the application service entity, the binding information upon acquiring the binding information from the HSS after acquiring the binding information from the HSS.
The access request further includes an authentication mode identity;
the application service entity acquires from the HSS the binding information through a Bootstrapping Server Function (BSF) entity used for performing initial checking and verification of user identity if the authentication mode identity represents an early Generic Authentication Architecture (GAA) mode.

Said acquiring from the HSS the binding information through the BSF entity includes:
sending, by the application service entity, to the BSF a message for binding information, the message contains the user identity of the Early IMS UE;
sending, by the BSF, to the HSS a request for the binding information according to the user identity in the message upon receiving the message, and responding the binding information to the application service entity;
saving, by the application service entity, the binding information;
the request for the binding information containing an authentication scheme field defined as an early IMS.

The BSF has an Early-BSF function or has an Early-BSF function and full 3G functions.

The application service entity and the HSS are located in the same home network or different home networks.

The access request further includes an authentication mode identity;
sending, by the application service entity, to the HSS a request for the binding information, receiving and saving the binding information responded by the HSS if the authentication mode identity represents a direct authentication mode.

The request sent to the HSS by the application service entity is contained in a User-Data-Request (UDR) message, and a specific information element in the request represents requesting the binding information; a response message sent to the application service entity by the HSS is contained in a User-Data-Answer (UDA) message with the IP address, and a specific information element in the response message represents requesting the binding information.

The application service entity and the HSS are located in the same home network.

The access request is contained in a Hyper Text Transfer Protocol (HTTP) GET message;
the authentication mode identity in the access request is contained in a user agent field of the HTTP GET message.

The user identity in the access request is an IP Multimedia Public Identity (IMPU); the binding information includes:
a relationship between the IMPU and the IP address of the Early IMS UE; or a relationship between all IMPUs and the IP address of the Early IMS UE.

The method further includes:
determining whether the binding information corresponding to the user identity in the access request is available in the application service entity after the application service entity receives the access request; if the binding information is available, the application service entity acquiring the binding information and authenticating the Early IMS UE; otherwise, the application service entity acquiring the binding information from the HSS.

The method further includes:
establishing a Transport Layer Security (TLS) tunnel between the Early IMS UE and the application service entity, and performing said initiating the access request to the application service entity.

A system for authenticating User Equipment (UE) includes:
an Early IP Multimedia Subsystem (IMS) UE, an application service entity and a Home Subscriber Server (HSS); wherein
the Early IMS UE may acquire an IP address upon accessing a third generation mobile communication system, and is used for initiating an access request containing a user identity to the application service entity;
the application service entity is used for receiving the access request from the Early IMS UE, sending to the HSS a request for binding information containing an IP address, and authenticating the Early IMS UE according to the binding information and the access request;
the HSS is used for responding to the application service entity the binding information according to the request from the application service entity.

The Early IMS UE includes:
a link establishing module, for initiating the access request to the application service entity.

The Early IMS UE further includes:
a service communicating module, for receiving a notification of authentication success from the application service entity via the link establishing module, and performing service communications with the application service entity.

The application service entity includes:
a request receiving module and a security information requesting and checking module; wherein
the request receiving module is used for receiving the access request from the Early IMS UE, notifying the security information requesting and checking module to acquire the binding information and receiving an authentication result from the security information requesting and checking module;
the security information requesting and checking module is used for requesting and receiving the binding information provided by the HSS according to the notification of the request receiving module, authenticating the Early IMS UE according to the binding information and the access request, and sending the authentication result to the request receiving module.

The security information requesting and checking module further used for:
saving the binding information;
determining whether the binding information corresponding to the user identity in the access request is available in the security information requesting and checking module upon receiving the access request from the Early IMS UE; if the binding information is available, authenticating the Early IMS UE; otherwise, requesting and receiving the binding information from the HSS.

The application service entity further includes:
a service communicating module, for receiving the authentication result from the request receiving module, and performing service communications with the Early IMS UE when the Early IMS UE is authenticated successfully.

The HSS includes:
a security binding information storing module, for saving the binding information, querying for binding information corresponding to the Early IMS UE in its own database according to the request from the application service entity, and responding binding information found to the application service entity.

The system further includes:
a BSF with an Early-BSF function, for receiving the request from the application service entity, forwarding the request to the HSS, receiving the binding information from the HSS, and forwarding the binding information to the application service entity.

The application service entity is an Application Server (AS) or an AS Proxy (AP).

The embodiments of this invention includes: after receiving an access request containing a user identity from the Early IMS UE, the application service entity acquiring binding information containing an IP address from the HSS, and then authenticating the Early IMS UE according to the binding information and the access request. As can be seen from the above technique scheme, the embodiments of the present invention make it possible to authenticate the Early IMS UE accessing the application service entity, which ensures not only the access of legal UE but also the security of networks. Particularly the early IMS services may be normally deployed to the Early IMS user and operated.

### Brief description of the drawings

Embodiments of this invention are hereinafter described in detail with reference to accompanying drawings so as to make the above characteristics and advantages of this invention more apparent for one skilled in the art.
Figure 1 is a simplified flowchart according to an embodiment of the present invention.
Figure 2 is a simplified flowchart according to an embodiment of the present invention.
Figure 3 is a schematic diagram illustrating a structure of the authentication system according to an embodiment of the present invention.
Figure 4 is a schematic diagram illustrating a structure of the authentication system according to another embodiment of the present invention.

### Detailed description of embodiments of the invention

Some embodiments of the present invention are hereinafter further described in detail with reference to the accompanying drawings and examples so as to make the technical solution and advantages thereof more apparent.

The method for authenticating UE in accordance with certain embodiments of the present invention is applicable to Early IMS UE that accesses an application service entity, and the Early IMS UE acquires an IP address after accessing a 3GPP network, and the method includes the steps:
the Early IMS UE sending an access request containing a user identity to the application service entity; the application service entity, according to the access request, acquiring from an HSS binding information containing an IP address and a user identity, and authenticating the Early IMS UE according to the binding information and the access request.

According to an embodiment of the present invention, the method for authenticating UE is described in detail hereinafter by an example in which it is supposed that the Early IMS UE is 2G UE.

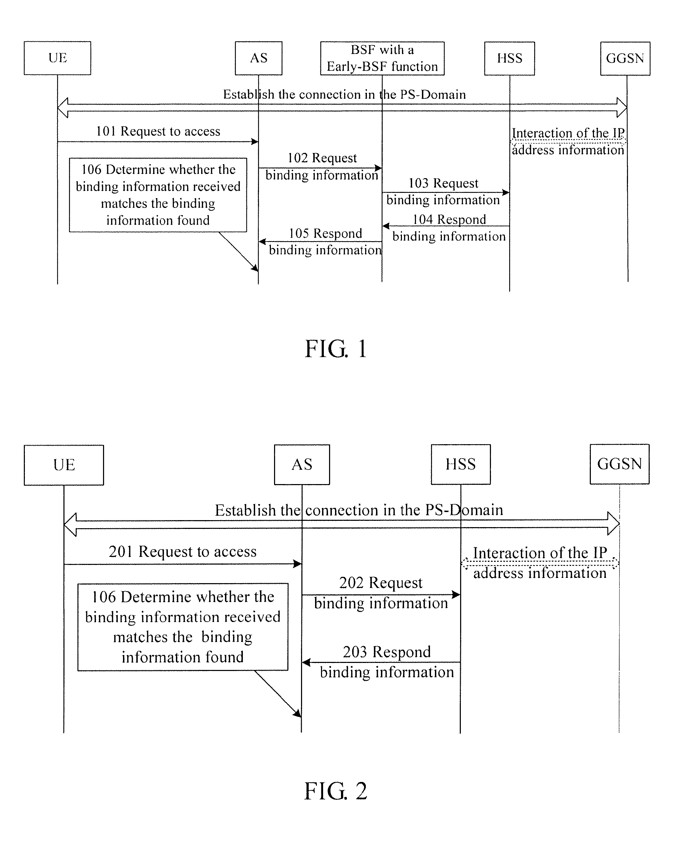

Figure 1 is a simplified flowchart according to an embodiment of the present invention. In this embodiment, 2G UE accesses a 3GPP PS-Domain and acquires an IP address assigned by a Gateway GPRS Support Node (GGSN), and the GGSN sends a Mobile Subscriber ISDN Number (MSISDN), an International Mobile Subscriber Identity (IMSI) and the IP address of the 2G UE to an HSS. The HSS queries for an IP Multimedia Private Identity (IMPI) of the 2G UE in the IMS system according to the MSISDN or IMSI of the 2G UE. Further, the HSS also binds the information of the IMPI of the 2G UE, an IMPU and MSISDN corresponding to the IMPI, and the IP address of the 2G UE to form binding information and saves the binding information. This embodiment is described by an example in which it is supposed that the 2G UE accesses an AS.

Step 101: The 2G UE sends an access request to the AS, the access request contains a user identity, e.g., an IMPU. The access request may further include an authentication mode identity that the 2G UE may support. Merely by way of an example, in a conventional Http-based Ut interface, the authentication mode identity may be contained in a user agent field of an Http GET message. In this embodiment, the authentication mode that the 2G UE may support is an Early Ut interface authentication mode using the GAA. And the authentication mode identity is called as Early-GAA-Ut, which may be added to the user agent field of the Http GET message.

Additionally, if the UE impersonates other UE, the user identity contained in the access request can not be the user identity of the UE.

After determining that the authentication mode identity is the Early-GAA-Ut according to the access request, the AS determines whether the binding information corresponding to the user identity in the access request is available at the AS; if yes, the procedure proceeds with Step 106; otherwise, the procedure proceeds with Step 102. The AS sends a request for binding information to a BSF used for performing initial checking and verification of a user identity. In this embodiment, the request may contain the user identity. The BSF may have a query function or have both query and 3G functions.

In an example, during the processing of 3G GAA, the AS needs to apply a Bootstrapping Transaction Identifier (B-TID) assigned by the BSF while requesting the binding information from the BSF, however, the B-TID assigned by the BSF is unavailable in the Early-GAA-Ut authentication mode. Therefore, after receiving the request for the binding information from the AS, the BSF having both query and 3G functions may distinguish between the general 3G GAA authentication mode and the Early-GAA-Ut authentication mode by determining that the B-TID or other user identities are contained in the request.

Step 103: After receiving the request for the binding information from the AS and determining that the user identity is carried in the request, the BSF sends to the HSS a binding information request containing the IP address and the user identity. The binding information request also contains the user identity in the access request, as well as an authentication mode field defined as the early IMS.

Step 104: The HSS queries for the binding information required by the BSF according to the user identity in the binding information request, and responds the binding information to the BSF.

Generally, the user identity in the access request is the IMPU. Therefore, the process of querying for the binding information by the HSS may includes: the HSS queries for the IMPI corresponding to the IMPU and the IP address corresponding to the IMPI according to the IMPU. The binding information responded to the BSF gives an association between the IMPU and the IP address of the 2G UE.

If the user identity carried by the 2G UE is the IMPI or the IMSI, the binding information responded by the HSS is binding information composed of the IMPI and the IP address, composed of the IMSI and the IP address, or composed of the IP address of the 2G UE and the IMPI and/or the IMPU required by the network which the 2G UE is using. That is to say, the binding information responded by the HSS is a corresponding relationship between the user identity of the 2G UE sending the access request and the IP address of the 2G UE.

Step 105: The BSF sends the binding information to the AS directly without saving it. In this way, when the AS requests the binding information from the BSF again, the BSF queries for it in the HSS, so as to ensure that the binding information acquired by the AS is always up to date.

Step 106: The AS authenticates the 2G UE according to the binding information and the access request.

The authentication action may include: the AS determining whether the IP address in the binding information stored by itself matches the IP address of the 2G UE, i.e., whether they are the same; if yes, the 2G UE is authenticated successfully, the access request is allowed; otherwise, the 2G UE may not be authenticated successfully, the access request is rejected. The authentication action may also includes: the AS determining whether the IP address in the binding information matches the IP address of the 2G UE; if yes, the 2G UE is authenticated successfully, the access request is allowed; otherwise, the 2G UE may not be authenticated successfully, the access request is rejected.

In the above embodiment, if the IP address of the 2G UE is modified or canceled, the GGSN notifies the HSS to update or delete the binding information. If the binding information saved in the HSS changes, the HSS does not need to notify the BSF, the reason thereof is that, if the IP address is modified or canceled, the connection-based application layer protocol disconnects the connection and reestablishes communication, and the AS deletes the binding information stored by itself after the connection is discommunicated. The AS requests the binding information from the BSF when the terminal reestablishes the communication.

In the above embodiment, the AS and the HSS may be located in the same home network or different home networks.

Figure 2 is a simplified flowchart according to another embodiment of the present invention. In this embodiment, the UE has accessed the 3GPP PS-Domain and acquired the IP address assigned by the GGSN. And the GGSN sends the MSISDN, IMSI and the IP address of the UE to the HSS. The HSS queries for the IMPI of the UE in the IMS system according to the MSISDN and IMSI of the UE, binds and saves information of the IMPI of the UE, the IMPU corresponding to the IMPI, MSISDN and the IP address of the UE. This embodiment is described by an example in which it is supposed that the 2G UE accesses an AS.

Step 201: The 2G UE sends to the AS an access request containing a user identity, e.g., an IMPU. The access request may further contain an authentication mode identity that the 2G UE may support. Merely by way of an example, in a known Http-based Ut interface, the authentication mode identity may be contained in a user agent field of an Http GET message. In this embodiment, the authentication mode that the 2G UE may support is a direct authentication mode by using Sh interface between the AS and the HSS, and here the direct authentication mode is briefly called as a Ut-Sh-Authentication mode. Then the authentication mode identity Ut-Sh-Authentication indication is added to the user agent field of the Http GET message.

After determining that the authentication mode identity is the Ut-Sh-Authentication according to the access request, the AS determines whether the binding information corresponding to the user identity in the access request is available at the AS; if yes, the procedure proceeds with Step 204; otherwise, the procedure proceeds with Step 202. The AS sends a binding information request containing an IP address and the user identity to the HSS through the Sh interface. The binding information request sent to the HSS by the AS contains the user identity in the access request. In general, the binding information request is contained in a UDR message, and a specific information element (Attribute-Value Pair (AVP)) in the binding information request is used for describing which data is requested. In this embodiment, the specific information element for requesting binding address information is added so as to request the IP address binding information through the Sh interface.

Step 203: The HSS queries for the binding information required by the AS according to the user identity in the binding information request, and responds the binding information to the AS. In general, the HSS uses a UDA message as a response message of the UDR message in the Sh interface. In this embodiment, specific AVP information may also be used in the UDA message.

The user identity in the access request is the IMPU in general, therefore, the process of querying for the binding information by the HSS includes: the HSS querying for the IMPI corresponding to the IMPU and the IP address corresponding to the IMPI, and the binding information responded is a relationship between the IMPU and the IP address of the 2G UE.

In an example, if the user identity carried by the 2G UE sending the access request is the IMPI or IMSI, the binding information responded by the HSS is binding information composed of the IP address and the IMPI, composed of the IP address and the IMSI, or composed of the IP address and the IMPI and/or the IMPU required by the network which the 2G UE is using. That is to say, the binding information responded by the HSS represents a corresponding relationship between the user identity of the 2G UE sending the access request and the IP address of the 2G UE.

Step 204: The AS authenticates the 2G UE according to the binding information and the access request.

Merely by way of an example, the authentication action may include: the AS determining whether the IP address and the user identity in the acquired binding information respectively matches the IP address of the 2G UE and the user identity in the access request, i.e., whether they are the same respectively; if yes, the 2G UE is authenticated successfully, and the access request is allowed; otherwise, the 2G UE may not be authenticated successfully, and the access request is rejected. The AS performs the authentication according to whether the IP address in the binding information is the same as the IP address of the 2G UE sending the access request.

In the above embodiment, if the IP address of the 2G UE is modified or cancelled, the GGSN notifies the HSS to update or delete the binding information. If the binding information saved in the HSS changes, the HSS does not need to notify the AS, the reason thereof is that, if the IP address is modified or cancelled, the connection-based application layer protocol disconnectd the connection and reestablishes communication, and the AS deletes the binding information stored by itself after the connection is discommunicated. The AS requests the binding information from the BSF when the terminal reestablishes the communication.

In the above embodiment, the AS and the HSS are located in the same home network.

The above embodiments are described by an example in which it is supposed that the UE accesses the AS. The AS in the above embodiments may be directly replaced by an AP, the authentication for the UE may be implemented by the AP instead of the AS, and one AP may correspond to one or more ASs. At this point, all entities similar to AS or AP are called as application service entities.

The relationship between the IMPU and IMPI is an association of multiple to one. In the above two embodiments, the binding information containing an IP address and all the IMPUs related to the IMPI may also be responded by the HSS. In this way, after the UE connects to the AS, the subsequent messages may still use other IMPUs, and the AS may save the relationships between all IMPUs owned by the UE and the IP address of the UE. Such processing is very useful when the AS is replaced by the AP in the above embodiments, because AP may correspond to multiple ASs, and implement the authentication instead of the ASs. The IMPUs used may be different when the UE sends the access request to different ASs. If the AP has saved the relationships between all IMPUs owned by the UE and the IP address of the UE, it may implement functions of proxy authentication rapidly and exactly without multiple queries in the HSS. Certainly, the AS may also perform the authentication directly without saving the binding information after receiving the binding information from the HSS.

As an example, in the above two embodiments, before the step 101 and 201 respectively, it may further include: the UE and the AS may establish a Transport Layer Security (TLS) tunnel based on the transport layer protection. As the TLS is a transport layer protection protocol, after the tunnel has been established, the application layer based certification process described in the above two embodiments may be performed so as to fully protect the security of application layer communication between the UE and the AS.

In the above embodiments, the network side is required to adapt to the 2G UE, i.e., the network side should be able to authenticate the 2G UE. Obviously, the 2G UE may also be required to adapt to the network side, namely, the 2G UE may be loaded with a software module so that the 2G UE may fully support 3G functions, i.e., the 2G UE may support authentication modes of 3G systems. In this way, the network side may authenticate the 2G UE by standard 3G authentication modes. The software module may be downloaded from Websites or acquired from operators directly.

The authentication mode mentioned in the above embodiments may be used not only when the 2G UE accesses an AS but also in the messages sent subsequently by the 2G UE.

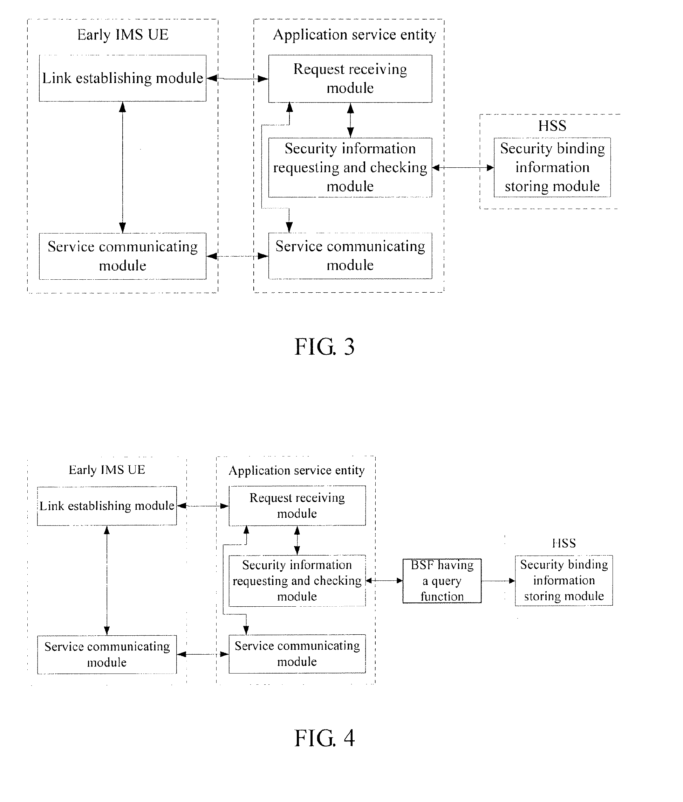

An embodiment of the present invention also provides a system for authenticating an Early IMS UE that accesses an application service entity. Figure 3 shows an authentication system according to an embodiment of this invention. The authentication system includes: Early IMS UE, an application service entity and an HSS. The Early IMS UE acquires an IP address after accessing a 3G mobile communication system and is used for sending to the application service entity an access request containing a user identity; the application service entity is used for receiving the access request from the Early IMS UE, sending to the HSS a request for binding information containing an IP address and the user identity and authenticating the Early IMS UE according to the binding information and the access request; the HSS is used for responding to the application service entity the binding information according to the request for binding information from the application service entity.

In particular, the Early IMS UE in Figure 3 includes a link establishing module for sending to the application service entity an access request containing the user identity. The Early IMS UE may also include a service communicating module for receiving a notification of the Early IMS UE being authenticated from the application service entity through the link establishing module, and performing the service communications with the application service entity.

Merely by way of an example, the application service entity includes a request receiving module and a security information requesting and checking module. The request receiving module is used for receiving the access request from the Early IMS UE, notifying the security information requesting and checking module to acquire the binding information and receiving an authentication result from the security information requesting and checking module; the security information requesting and checking module is used for requesting the HSS for the binding information according to the notification of the request receiving module, authenticating the Early IMS UE according to the binding information and the access request, and sending the authentication result to the request receiving module. In addition, the security information requesting and checking module is further configured to save in its own database the binding information provided by the HSS, and after receiving the access request from the Early IMS UE, determine whether the binding information corresponding to the user identity in the access request is available at the security information requesting and checking module, if yes, perform the authentication directly; otherwise, request and receive the binding information provided by the HSS.

Merely by way of an example, the application service entity may also include a service communicating module for receiving the authentication result from the request receiving module, and performing the service communications with the Early IMS UE when the Early IMS UE is authenticated.

Merely by way of an example, the HSS includes a security binding information saving module for saving the binding information, querying for the binding information corresponding to the Early IMS UE in its own database according to the request for binding information from the application service entity, and responding the binding information found to the application service entity.

Figure 4 shows an authentication system according to another embodiment of the present invention. The difference between the authentication system of this embodiment and that of Figure 3 includes: a BSF having a query function is added. In an example, the BSF is used for receiving a request for binding information containing an IP address and the user identity from an application service entity, forwarding the request for binding information to the HSS, receiving the binding information from the HSS, and forwarding the binding information to the application service entity.

In another example, the Early IMS UE and the application service entity may not include the service communicating module in the authentication system mentioned in Figure 3 and Figure 4.

Merely by way of an example, the above application service entity is an AS or an AP.

The foregoing are only preferred embodiments of the present invention and are not for use in limiting the protection scope thereof. All the modifications, equivalent replacements or improvements in the scope of the present invention's sprit and principles shall be included in the protection scope of the present invention.

## Claims

1. A method for authenticating User Equipment (UE), applicable to Early IP Multimedia Subsystem (IMS) UE accessing an application service entity directly, the Early IMS UE acquires an IP address upon accessing a third generation mobile communication system, the method comprising:
initiating, by the Early IMS UE, an access request containing a user identity to the application service entity;
acquiring, by the application service entity, binding information containing an IP address from a Home Subscriber Server (HSS) according to the access request;
authenticating, by the application service entity, the Early IMS UE according to the binding information and the access request.

2. The method of Claim 1, wherein said authenticating the Early IMS UE according to the binding information and the access request comprises:
determining, by the application service entity, whether the IP address in the binding information matches the IP address of the Early IMS UE; if they match, the Early IMS UE is authenticated successfully; otherwise, the Early IMS UE is authenticated unsuccessfully.

3. The method of Claim 1, wherein said authenticating the Early IMS UE according to the binding information and the access request comprises:
determining, by the application service entity, whether the IP address and the user identity in the binding information matches the IP address and the user identity of the Early IMS UE respectively; if they match respectively, the Early IMS UE is authenticated successfully; otherwise, the Early IMS UE is authenticated unsuccessfully.

4. The method of Claim 2 or 3, further comprising:
saving, by the application service entity, the binding information upon acquiring the binding information from the HSS after acquiring the binding information from the HSS.

5. The method of Claim 1, wherein the access request further comprises an authentication mode identity;
the application service entity acquires from the HSS the binding information through a Bootstrapping Server Function (BSF) entity used for performing initial checking and verification of user identity if the authentication mode identity represents an early Generic Authentication Architecture (GAA) mode.

6. The method of Claim 5, wherein said acquiring from the HSS the binding information through the BSF entity comprises:
sending, by the application service entity, to the BSF a message for binding information, the message contains the user identity of the Early IMS UE;
sending, by the BSF, to the HSS a request for the binding information according to the user identity in the message upon receiving the message, and responding the binding information to the application service entity;
saving, by the application service entity, the binding information;
the request for the binding information containing an authentication scheme field defined as an early IMS.

7. The method of Claim 6, wherein the BSF has an Early-BSF function or has an Early-BSF function and full 3G functions.

8. The method of Claim 6, wherein the application service entity and the HSS are located in the same home network or different home networks.

9. The method of Claim 1, wherein the access request further comprises an authentication mode identity;
sending, by the application service entity, to the HSS a request for the binding information, receiving and saving the binding information responded by the HSS if the authentication mode identity represents a direct authentication mode.

10. The method of Claim 9, wherein the request sent to the HSS by the application service entity is contained in a User-Data-Request (UDR) message, and a specific information element in the request represents requesting the binding information; a response message sent to the application service entity by the HSS is contained in a User-Data-Answer (UDA) message with the IP address, and a specific information element in the response message represents requesting the binding information.

11. The method of Claim 9, wherein the application service entity and the HSS are located in the same home network.

12. The method of Claim 5 or 9, wherein the access request is contained in a Hyper Text Transfer Protocol (HTTP) GET message;
the authentication mode identity in the access request is contained in a user agent field of the HTTP GET message.

13. The method of Claim 1, wherein the user identity in the access request is an IP Multimedia Public Identity (IMPU);
the binding information comprises:
a relationship between the IMPU and the IP address of the Early IMS UE; or a relationship between all IMPUs and the IP address of the Early IMS UE.

14. The method of Claim 1, further comprising:
determining whether the binding information corresponding to the user identity in the access request is available in the application service entity after the application service entity receives the access request; if the binding information is available, the application service entity acquiring the binding information and authenticating the Early IMS UE; otherwise, the application service entity acquiring the binding information from the HSS.

15. The method of Claim 1, further comprising:
establishing a Transport Layer Security (TLS) tunnel between the Early IMS UE and the application service entity, and performing said initiating the access request to the application service entity.

16. A system for authenticating User Equipment (UE), comprising:
an Early IP Multimedia Subsystem (IMS) UE, an application service entity and a Home Subscriber Server (HSS); wherein
the Early IMS UE may acquire an IP address upon accessing a third generation mobile communication system, and is used for initiating an access request containing a user identity to the application service entity;
the application service entity is used for receiving the access request from the Early IMS UE, sending to the HSS a request for binding information containing an IP address, and authenticating the Early IMS UE according to the binding information and the access request;
the HSS is used for responding to the application service entity the binding information according to the request from the application service entity.

17. The system of Claim 16, wherein the Early IMS UE comprises:
a link establishing module, for initiating the access request to the application service entity.

18. The system of Claim 17, wherein the Early IMS UE further comprises:
a service communicating module, for receiving a notification of authentication success from the application service entity via the link establishing module, and performing service communications with the application service entity.

19. The system of Claim 16, wherein the application service entity comprises:
a request receiving module and a security information requesting and checking module; wherein
the request receiving module is used for receiving the access request from the Early IMS UE, notifying the security information requesting and checking module to acquire the binding information and receiving an authentication result from the security information requesting and checking module;
the security information requesting and checking module is used for requesting and receiving the binding information provided by the HSS according to the notification of the request receiving module, authenticating the Early IMS UE according to the binding information and the access request, and sending the authentication result to the request receiving module.

20. The system of Claim 19, wherein the security information requesting and checking module further used for:
saving the binding information;
determining whether the binding information corresponding to the user identity in the access request is available in the security information requesting and checking module upon receiving the access request from the Early IMS UE; if the binding information is available, authenticating the Early IMS UE; otherwise, requesting and receiving the binding information from the HSS.

21. The system of Claim 19, wherein the application service entity further comprises:
a service communicating module, for receiving the authentication result from the request receiving module, and performing service communications with the Early IMS UE when the Early IMS UE is authenticated successfully.

22. The system of Claim 16, wherein the HSS comprises:
a security binding information storing module, for saving the binding information, querying for binding information corresponding to the Early IMS UE in its own database according to the request from the application service entity, and responding binding information found to the application service entity.

23. The system of any of Claims 16 to 22, further comprising:
a BSF with an Early-BSF function, for receiving the request from the application service entity, forwarding the request to the HSS, receiving the binding information from the HSS, and forwarding the binding information to the application service entity.

24. The system of Claim 16, wherein the application service entity is an Application Server (AS) or an AS Proxy (AP).
